# EUROPÄISCHE PATENTSCHRIFT

(11) **EP 1 606 527 B1**
(45) Veröffentlichungstag und Bekanntmachung des Hinweises auf die Patenterteilung: **05.03.2008**
(21) Anmeldenummer: 03795843.6
(22) Anmeldetag: 24.11.2003
(51) Int. Cl.: F16D 1/00

(54) **BETÄTIGUNGSEINHEIT FÜR EINE ELEKTROMECHANISCH BETÄTIGBARE SCHEIBENBREMSE**
ACTUATING UNIT FOR AN ELECTROMECHANICAL DISC BRAKE
UNITE D'ACTIONNEMENT POUR UN FREIN A DISQUE A ACTIONNEMENT ELECTROMECANIQUE

(30) Priorität: 23.11.2002 DE 10254716
(43) Veröffentlichungstag der Anmeldung: 21.12.2005
(73) Patentinhaber: Continental Teves AG & Co. oHG, 60488 Frankfurt am Main (DE)
(72) Erfinder: HALASY-WIMMER, Georg, 71706 Markgröningen (DE); LINHOFF, Paul, 61267 Neu-Anspach (DE); SEMSCH, Martin, 35510 Maibach-Butzbach (DE); SCHMITT, Stefan, 65343 Eltville (DE); VÖLKEL, Jürgen, 60486 Frankfurt (DE); BAYER, Bernward, 63322 Rödermark/Ober-Roden (DE); POHLMANN, Andreas, 65760 65760 Eschborn (DE); DAUSEND, Uwe, 64367 Mühltal (DE); SCHUMANN, Marcus, 55246 Kostheim (DE)
(86) Internationale Anmeldenummer: PCT/EP2003/013184
(87) Internationale Veröffentlichungsnummer: WO 2004/048792

(56) Entgegenhaltungen:
- WO-A-98/01682
- WO-A-03/016745
- US-A- 5 501 305

## Beschreibung

Die Erfindung betrifft eine Betätigungseinheit für eine elektromechanisch betätigbare Scheibenbremse für Kraftfahrzeuge gemäß dem Oberbegriff des Patentanspruchs 1.

Eine derartige Betätigungseinheit ist aus der internationalen Patentanmeldung WO 98/01682 bekannt. Als nachteilig ist bei der vorbekannten Betätigungseinheit die Tatsache anzusehen, dass die darin offenbarte Nachstellvorrichtung lediglich zum Kompensieren des Belagverschleißes verwendet wird und nur Wirkung bei der Feststellbremsfunktion zeigt.

Es ist daher Aufgabe der vorliegenden Erfindung eine Betätigungseinheit für eine elektromechanisch betätigbare Scheibenbremse für Kraftfahrzeuge der eingangs genannten Gattung vorzuschlagen, deren Nachstellvorrichtung auch auf die Betriebsbremse wirkt und eine bedarfsgerechte Änderung ihrer Dynamik und erreichbaren Zuspannkraft ermöglicht.

Diese Aufgabe wird erfindungsgemäß durch die im kennzeichnenden Teil des Patentanspruchs aufgeführten Merkmale gelöst. Vorteilhafte Weiterbildungen des Erfindungsgegenstandes sind in den Unteransprüchen 2 bis 21 aufgeführt. Weitere technische Merkmale, Vorteile und Eigenschaften der Erfindung erhellen aus der nachfolgenden Beschreibung eines Ausführungsbeispiels unter Bezugnahme auf die beiliegenden Zeichnungen, in denen zeigen:
Fig. 1 eine schematische Darstellung der Hebelanordnung der erfindungsgemäßen Betätigungseinheit,
Fig. 2 eine diagrammatische Darstellung der Funktion der erfindungsgemäßen Betätigungseinheit, insbesondere der Abhängigkeit des Übersetzungsverhältnisses der Hebelanordnung vom Abstand zwischen dem Abstützpunkt und einem Krafteinleitungspunkt der Nachstellvorrichtung, gemäß Fig. 1, wobei der Maßstab der horizontalen Koordinatenachse dem Maßstab gemäß Fig. 1 entspricht,
Fig. 3 eine Fahrzeugbremse mit einer erfindungsgemäßen Betätigungseinheit in einer axialen Schnittdarstellung.

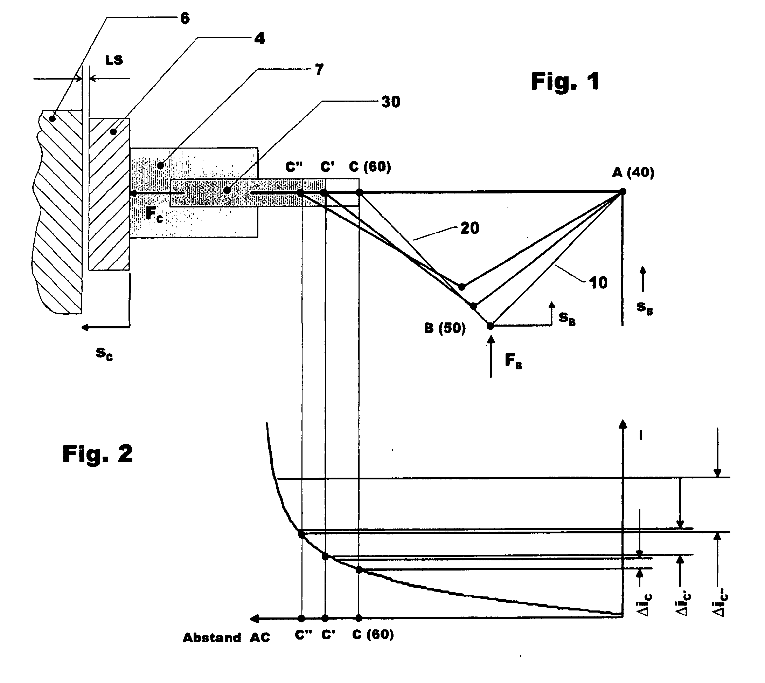

Die in Fig. 1 dargestellte Hebelanordnung besteht im wesentlichen aus einem ersten Hebel 10 bzw. AB, einem zweiten Hebel 20 bzw. BC, drei Gelenkpunkten A, B, und C sowie einer dem Kompensieren des Verschleißes von nicht vollständig gezeigten Reibbelägen dienenden Nachstellvorrichtung 30. Der erstgenannte Gelenkpunkt A, in dem der erste Hebel 10 gelagert ist, ist bezüglich eines nicht dargestellten Bremssattels unbeweglich angeordnet. Der zweitgenannte Gelenkpunkt B stellt einen Verbindungspunkt 50 der beiden Hebel 10, 20 dar. Der zweite Hebel 20 ist im drittgenannten Punkt C bzw. 60, der den Krafteinleitungspunkt der Nachstellvorrichtung 30 darstellt, mit der Nachstellvorrichtung 30 verbunden, die mit einem Betätigungselement 7 in kraftübertragender Verbindung steht, das die von der Hebelanordnung aufgebrachte Betätigungskraft bzw. Zuspannkraft auf einen (4) der Reibbeläge überträgt. Der Reibbelag 4 ist dabei in einem Abstand LS von einer Bremsscheibe 6 angeordnet, der in der Fachterminologie als Lüftspiel bezeichnet wird. Dabei werden mit C, C' und C'' drei durch unterschiedliche Zustände der Nachstellvorrichtung 30 bedingte Positionen des Krafteinleitungspunktes C bzw. 60 bezeichnet.

Wird nun im Gelenkpunkt B bzw. Verbindungspunkt 50 eine Betätigungs- bzw. Zuspannkraft F_{B} in vertikaler Richtung eingeleitet, so überträgt der zweite Hebel 20 auf die Nachstellvorrichtung 30 eine Ausgangskraft, deren horizontale Kraftkomponente mit F_{C} bezeichnet wird. Dabei bewegt sich der Verbindungspunkt 50 in der Zeichnung senkrecht nach oben um einen Betätigungsweg S_{B}, während sich der dritte Gelenkpunkt C bzw. 60 und damit auch die Nachstellvorrichtung 30 und das Betätigungselement 7 um einen Ausgangsweg S_{C} horizontal nach links bewegen. Das Verhältnis zwischen der Ausgangskraft F_{C} und der Eingangskraft F_{B} wird als Übersetzungsverhältnis i der Hebelanordnung bezeichnet, wobei mit Δi der während einer Betätigung der Hebelanordnung wirksame Übersetzungsbereich bezeichnet wird. Die hierbei benutzten Indizes C, C' und C" beziehen sich auf die bereits erwähnten Zustände der Nachstellvorrichtung 30.

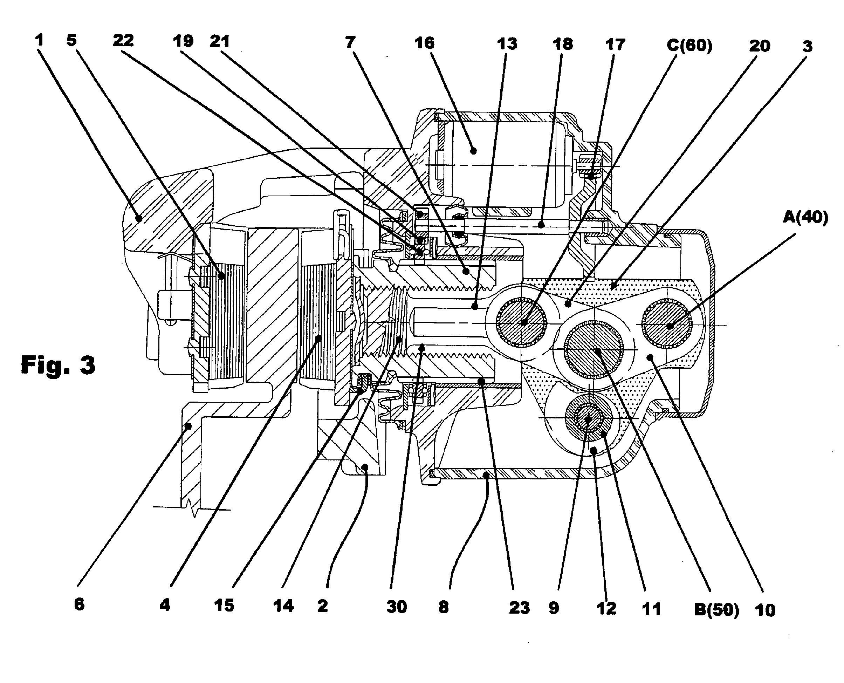

Die in Fig. 3 in axialer Schnittdarstellung gezeigte, elektromechanisch betätigbare Scheibenbremse nach der Erfindung besteht im wesentlichen aus einem Bremssattel bzw. Schwimmsattel 1, der in einem feststehenden Halter 2 verschiebbar gelagert ist, einer nicht vollständig gezeigten Antriebseinheit, einer Bremsscheibe 6 sowie einem Paar von Reibbelägen 4 und 5. Die Reibbeläge 4, 5 sind im Bremssattel 1 derart angeordnet, dass sie der linken und der rechten Seitenfläche der Bremsscheibe 6 zugewandt sind.

Nachstehend wird der in der Zeichnung rechts gezeigte Reibbelag 4 als erster bzw. innerer Reibbelag und der andere, mit 5 bezeichnete Reibbelag als zweiter bzw. äußerer Reibbelag bezeichnet. Während der erste Reibbelag 4 mittels eines Betätigungselements 7 durch die Antriebsseinheit direkt mit der Bremsscheibe 6 in Eingriff bringbar ist, wird der zweite Reibbelag 5 durch die Wirkung einer bei der Betätigung der Anordnung vom Bremssattel 1 aufgebrachten Reaktionskraft gegen die gegenüberliegende Seitenfläche der Bremsscheibe 6 gedrückt, so dass auf die Bremsscheibe 6 eine Bremskraft ausgeübt wird. Der zweite Reibbelag 5 ist dabei mit dem Bremssattel 1 fest verbunden.

Wie bereits im Zusammenhang mit Fig. 1 erwähnt wurde, besteht die Hebelanordnung 3 im Wesentlichen aus dem ersten Hebel 10 sowie dem zweiten Hebel 20. Die Antriebseinheit wird durch einen nicht dargestellten Elektromotor sowie ein den ersten Reibbelag 4 betätigendes Untersetzungsgetriebe gebildet, das bei dem gezeigten Beispiel durch die im Zusammenhang mit Fig. 1 erwähnte Hebelanordnung 3 gebildet ist, das in einem Getriebegehäuse 8 gelagert ist. Die Gelenkpunkte A(40) und C(60) können sich nur auf einer Achse relativ zueinander verschieben.

Der Elektromotor mit seiner Drehachse 9 ist senkrecht zur Zeichnungsebene angeordnet. Sein Antriebsmoment wird über ein nicht dargestelltes, rotatorisches Getriebe übersetzt. Auf einer Ausgangswelle 11 des Getriebes sitzt ein Nocken 12, der das Antriebsmoment in eine radiale Kraft umwandelt, die auf den zweiten Gelenkpunkt B (50) bzw. die mittlere bewegliche Achse der Hebelanordnung 3 wirkt.
Während der erste Hebel 10 am ersten getriebegehäusefesten Gelenkpunkt A(40) begrenzt drehbar angelenkt ist, ist auf dem zweiten Hebel 20 im dritten Gelenkpunkt C (60) ein Gewindebolzen 13 gelagert, der ein Eingangsglied der bereits erwähnten Nachstellvorrichtung 30 bildet. Der Gewindebolzen 13 ist über ein selbsthemmendes Gewinde 14 mit dem oben erwähnten Betätigungselement 7 verbunden, das als ein zylindrischer Bremskolben ausgeführt und im Bremssattel 1 drehbar gelagert ist. Das der Hebelanordnung 3 abgewandte Ende des Bremskolbens 7 liegt am ersten Bremsbelag 4 an, mit dem es mittels einer Zugkraft übertragenden Verbindung 15 gekoppelt ist. Der dritte Gelenkpunkt C (60) bildet den im Zusammenhang mit Fig. 1 erwähnten Krafteinleitungspunkt der Nachstellvorrichtung 30.

Um Änderungen des Abstands A-C zwischen dem Gelenkpunkt A bzw. 40 und dem Krafteinleitungspunkt C bzw. 60 der Nachstellvorrichtung 30 im Betätigungselement 7 unter Beibehaltung eines gleichbleibenden Betriebslüftspiels LS (Fig. 1) zwischen Bremsbelägen 4,5 und Bremsscheibe 6 zu ermöglichen ist im Getriebegehäuse 8 ein Nachstellaktuator bzw. ein zweiter Elektromotor 16 geringer Leistung vorgesehen, mit dessen Hilfe der Bremskolben 7 in eine Drehbewegung versetzt wird. Der Übertragung der Rotationsbewegung des Elektromotors 16 auf den Bremskolben 7 dient eine erste Stirnradstufe 17, eine Welle 18 sowie eine zweite Stirnradstufe 19, die aus einem auf der Welle 18 angeordneten Ritzel 21 sowie einem ringförmigen Übertragungselement 22 besteht, das mit einer auf der Oberfläche des Bremskolbens 7 ausgebildeten Außenverzahnung 23 zusammenwirkt.

Bei einem Betriebsbremsvorgang wird die Spannkraft F_{C} über das Gewinde 14 vom zweiten Hebel 20 über den Gewindebolzen 13 in den Bremskolben 7 und von dort in den ersten Bremsbelag 4 übertragen. Dabei ist die Bewegung des Bremskolbens 7 linear und der Bremskolben 7 dient gleichzeitig der Führung des Belags 4.

Um die Dynamik in Löserichtung zu erhöhen, das Lüftspiel LS aktiv einzustellen und die Hebelanordnung 3 in oder über das Lüftspiel LS hinaus zurückzuziehen, verläuft der Kraftfluss in negativer Spannrichtung vom Nocken 12 auf die Hebelanordnung 3 über die im Bild nicht gezeigte aktive Rückführung. Diese "desmodromische" Rückführung besteht aus einer zugkraftübertragenden Einrichtung, die einerseits im Gelenkpunkt B (50) mit einem Drehfreiheitsgrad gelagert ist und andererseits in eine parallel zur Außenkontur laufende Nut an einer Seitenfläche des Nockens 12 eingreift. Über die zugkraftübertragende Verbindung 15 zwischen dem Bremskolben 7 und dem ersten Reibbelag 4 wird die Zugkraft, die von der Hebelanordnung 3 über den Gewindebolzen 13 der Nachstellvorrichtung 30 in den Bremskolben 7 geleitet wird, auf den Belag 4 übertragen.

Bei dem Betriebszustand "Nachstellen" wird der Belag 4 in eine normalkraftfreie Position bewegt und der Bremskolben 7 verdreht. Die benötigte Nachstellenergie wird von dem Nachstellaktuator 16 bereitgestellt, der um ca. 40° in die Zeichnungsebene gedreht dargestellt ist. Durch die Drehbewegung des Bremskolbens 7 wird je nach Drehrichtung der Abstand zwischen Bremsbelag 4 und Krafteinleitungspunkt C(60) verkleinert oder vergrößert und somit sowohl der Verschleiß nachgestellt, als auch der wirksame Übersetzungsbereich der Hebelanordnung 3 verändert.

## Patentansprüche

1. Betätigungseinheit für eine elektromechanisch betätigbare Scheibenbremse für Kraftfahrzeuge, die an einem Bremssattel (1) angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines Betätigungselementes (7) durch die Betätigungseinheit direkt und der andere Reibbelag (5) durch die Wirkung einer vom Bremssattel (1) aufgebrachten Reaktionskraft mit der Bremsscheibe (6) in Eingriff bringbar ist, wobei die Betätigungseinheit einen Elektromotor sowie eine Hebelanordnung (3) aufweist, die wirkungsmäßig dem Elektromotor nachgeschaltet und die aus einem ersten Hebel (10), der an einem bezüglich des Bremssattels (1) unbeweglich angeordneten Gelenkpunkt (A bzw.40) gelagert ist, sowie einem zweiten Hebel (20) besteht, der mit dem Betätigungselement (7) mittels einer dem Kompensieren des Verschleißes der Reibbeläge (4,5) dienenden Nachstellvorrichtung (30) in kraftübertragender Verbindung steht, wobei die Nachstellvorrichtung (30) derart ausgebildet ist, dass Änderungen des wirksamen Übersetzungsbereichs der Hebelanordnung (10,20) durch eine Veränderung des Abstands (A-C) zwischen dem Gelenkpunkt (A bzw. 40) und einem Krafteinleitungspunkt (C bzw. 60) der Nachstellvorrichtung (30) im Betätigungselement (7) unter Beibehaltung eines gleichbleibenden Betriebslüftspiels zwischen Bremsbelägen (4,5) und Bremsscheibe (6) ermöglicht werden,
**dadurch gekennzeichnet, dass** der wirksame Übersetzungsbereich in Abhängigkeit von frei wählbaren Parametern im Sinne der Einstellung des Abstands (A - C) aktiv beeinflussbar ist und dass die Nachstellvorrichtung (30) einen eigenen Antrieb (16) aufweist, durch dessen Wirkung die Position des Krafteinleitungspunktes (C bzw. 60) der Nachstellvorrichtung (30) im Betätigungselement (7) variierbar ist.

2. Betätigungseinheit nach Anspruch 1
**dadurch gekennzeichnet, dass** die Nachstellvorrichtung (30) durch einen mit dem zweiten Hebel (20) gekoppelten Gewindebolzen (13) gebildet ist, der mit dem Betätigungselement (7) mittels eines selbsthemmenden Gewindes (14) zusammenwirkt.

3. Betätigungseinheit nach Anspruch 2 **dadurch gekennzeichnet, dass** das Betätigungselement (7) zylinderförmig ausgeführt ist, im Bremssattel (1) drehbar gelagert ist, und mit dem Antrieb (16) der Nachstellvorrichtung (30) derart zusammenwirkt, dass das Betätigungselement (7) in eine Drehbewegung versetzt wird.

4. Betätigungseinheit nach Anspruch 3 **dadurch gekennzeichnet, dass** das Betätigungselement (7) auf seiner Oberfläche mit einer Verzahnung (23) versehen ist, die über ein ringförmiges Übertragungselement (22) mit einem verzahnten Element (Ritzel (21)) im Eingriff steht, das an einer dem Antrieb (16) der Nachstellvorrichtung (30) zugeordneten Antriebswelle (18) angeordnet ist.

5. Betätigungseinheit nach einem der Ansprüche 1 bis 4 **dadurch gekennzeichnet, dass** die Betätigung der Hebelanordnung (3) mittels eines Nockenprofils (12) erfolgt, das an einem Verbindungspunkt (B bzw. 50) der Hebel (10,20) angreift.

6. Betätigungseinheit nach Anspruch 5 **dadurch gekennzeichnet, dass** das Betätigungselement (7) mit dem ihm zugeordneten Reibbelag (4) in einer zugkraftübertragenden Verbindung (15) steht und dass das Nockenprofil (12) an dem Verbindungspunkt (B bzw. 50) der Hebel (10,20) derart gefesselt ist, dass eine Zugkraft auf das Betätigungselement (70) übertragbar ist.

7. Betätigungseinheit nach Anspruch 1 **dadurch gekennzeichnet, dass** der wirksame Übersetzungsbereich in Abhängigkeit von der Fahrzeuggeschwindigkeit aktiv beeinflussbar ist.

8. Betätigungseinheit nach Anspruch 1 **dadurch gekennzeichnet, dass** der wirksame Übersetzungsbereich in Abhängigkeit vom eingelegten Getriebegang aktiv beeinflussbar ist.

9. Betätigungseinheit nach Anspruch 1 **dadurch gekennzeichnet, dass** der wirksame Übersetzungsbereich in Abhängigkeit von der Motordrehzahl oder dem Motormoment aktiv beeinflussbar ist.

10. Betätigungseinheit nach Anspruch 1 **dadurch gekennzeichnet, dass** der wirksame Übersetzungsbereich in Abhängigkeit vom Beladungszustand des Fahrzeuges aktiv beeinflussbar ist.

11. Betätigungseinheit nach Anspruch 1 **dadurch gekennzeichnet, dass** der wirksame Übersetzungsbereich in Abhängigkeit von Ausgangssignalen eines Abstandsregelungssystems aktiv beeinflussbar ist.

12. Betätigungseinheit nach Anspruch 1 **dadurch gekennzeichnet, dass** der wirksame Übersetzungsbereich in Abhängigkeit von einer den Reibwert zwischen Reifen und Straßenbelag erfassenden Einrichtung aktiv beeinflussbar ist.

13. Betätigungseinheit nach Anspruch 1 **dadurch gekennzeichnet, dass** der wirksame Übersetzungsbereich in Abhängigkeit von Ausgangssignalen einer Einrichtung zur Fußraumbeobachtung aktiv beeinflussbar ist.

14. Betätigungseinheit nach Anspruch 1 **dadurch gekennzeichnet, dass** der wirksame Übersetzungsbereich in Abhängigkeit von der Betätigungsgeschwindigkeit des Bremspedals aktiv beeinflussbar ist.

15. Betätigungseinheit nach Anspruch 1 **dadurch gekennzeichnet, dass** der wirksame Übersetzungsbereich in Abhängigkeit von Parametern aktiv beeinflussbar ist, die in einer Analyse von vorhergehenden Bremsvorgängen in einem begrenzten Zeitfenster ermittelt wurden.

16. Betätigungseinheit nach Anspruch 1 **dadurch gekennzeichnet, dass** der wirksame Übersetzungsbereich in Abhängigkeit von Betriebsparametern der Bremse aktiv beeinflussbar ist.

17. Betätigungseinheit nach Anspruch 1 **dadurch gekennzeichnet, dass** der wirksame Übersetzungsbereich in Abhängigkeit vom Verschleißzustand der Reibbeläge aktiv beeinflussbar ist.

18. Betätigungseinheit nach Anspruch 1 **dadurch gekennzeichnet, dass** der wirksame Übersetzungsbereich in Abhängigkeit von der aktuellen Steifigkeit der Bremse aktiv beeinflussbar ist.

19. Betätigungseinheit nach Anspruch 1 **dadurch gekennzeichnet, dass** der wirksame Übersetzungsbereich in Abhängigkeit von der aktuellen Temperatur der Bremse aktiv beeinflussbar ist.

20. Betätigungseinheit nach Anspruch 1 **dadurch gekennzeichnet, dass** der wirksame Übersetzungsbereich in Abhängigkeit vom Einschaltzustand eines Geschwindigkeitsregelsystems aktiv beeinflussbar ist.

21. Betätigungseinheit nach Anspruch 1 **dadurch gekennzeichnet, dass** der wirksame Übersetzungsbereich in Abhängigkeit von dem von Ausgangssignalen eines Regensensors abgeleiteten Straßenzustand aktiv beeinflussbar ist.

## Claims

1. Actuating unit for an electromechanically operable disc brake for motor vehicles which is arranged at a brake caliper (1), in which two friction linings (4, 5) that interact with each one lateral surface of a brake disc (6) are arranged so as to be displaceable within limits, with one (4) of the friction linings (4, 5) being movable into engagement with the brake disc (6) directly by the actuating unit by means of an actuating element (7), while the other friction lining (5) is movable into engagement with the brake disc (6) by the effect of a reaction force applied by the brake caliper (1), with the actuating unit including an electric motor and a lever assembly (3) which is connected downstream of the electric motor in terms of effect and which is composed of a first lever (10) that is mounted on a fulcrum joint (A or 40, respectively) being immovably arranged with respect to the brake caliper (1) as well as of a second lever (20), which is in a force-transmitting connection with the actuating element (7) by means of a readjusting device (30) used to compensate the wear of the friction linings (4, 5), with the readjusting device (30) being designed in such a fashion that variations of the effective range of transmission of the lever assembly (10, 20) are rendered possible due to a change of the distance (A-C) between the fulcrum joint (A or 40, respectively) and a point of introduction of forces (C or 60, respectively) of the readjusting device (30) in the actuating element (7), while maintaining a constant operational clearance between brake linings (4, 5) and brake disc (6),
**characterized in that** the effective range of transmission can be influenced actively depending on freely selectable parameters in the sense of setting the distance (A - C), and **in that** the readjusting device (30) includes a drive (16) of its own, the effect of which allows varying the position of the point of introduction of forces (C or 60, respectively) of the readjusting device (30) in the actuating element (7).

2. Actuating unit as claimed in claim 1,
**characterized in that** the readjusting device (30) is formed of a threaded pin (13) which is coupled to the second lever (20) and cooperates with the actuating element (7) by means of a self-locking thread (14).

3. Actuating unit as claimed in claim 2,
**characterized in that** the actuating element (7) has a cylinder-shaped design, is pivoted in the brake caliper (1) and cooperates with the drive (16) of the readjusting device (30) in such a fashion that rotation of the actuating element (7) is induced.

4. Actuating unit as claimed in claim 3,
**characterized in that** the surface of the actuating element (7) is provided with a toothing (23) that meshes with a toothed element (pinion (21)) by way of an annular transmission element (22), the said pinion being arranged on a drive shaft (18) associated with the drive (16) of the readjusting device (30).

5. Actuating unit as claimed in any one of claims 1 to 4,
**characterized in that** the lever assembly (3) is actuated by means of a cam profile (12) which makes catch at a connecting point (B or 50, respectively) of the levers (10, 20).

6. Actuating unit as claimed in claim 5,
**characterized in that** the actuating element (7) is in a tensile-force-transmitting connection (15) with its associated friction lining (4), and **in that** the cam profile (12) is anchored at the connecting point (B or 50, respectively) of the levers (10, 20) in such a manner that a tensile force can be transmitted to the actuating element (70).

7. Actuating unit as claimed in claim 1,
**characterized in that** the effective range of transmission can be influenced actively depending on the vehicle speed.

8. Actuating unit as claimed in claim 1,
**characterized in that** the effective range of transmission can be influenced actively depending on the gear engaged.

9. Actuating unit as claimed in claim 1,
**characterized in that** the effective range of transmission can be influenced actively depending on the engine rotational speed or the engine torque.

10. Actuating unit as claimed in claim 1,
**characterized in that** the effective range of transmission can be influenced actively depending on the load condition of the vehicle.

11. Actuating unit as claimed in claim 1,
**characterized in that** the effective range of transmission can be influenced actively depending on output signals of a collision avoidance system.

12. Actuating unit as claimed in claim 1,
**characterized in that** the effective range of transmission can be influenced actively depending on a device sensing the coefficient of friction between tires and road pavement.

13. Actuating unit as claimed in claim 1,
**characterized in that** the effective range of transmission can be influenced actively depending on output signals of a device for monitoring the leg room.

14. Actuating unit as claimed in claim 1,
**characterized in that** the effective range of transmission can be influenced actively depending on the actuating speed of the brake pedal.

15. Actuating unit as claimed in claim 1,
**characterized in that** the effective range of transmission can be influenced actively depending on parameters which are determined in a limited time window in an analysis of previous braking operations.

16. Actuating unit as claimed in claim 1,
**characterized in that** the effective range of transmission can be influenced actively depending on operating parameters of the brake.

17. Actuating unit as claimed in claim 1,
**characterized in that** the effective range of transmission can be influenced actively depending on the wear condition of the friction linings.

18. Actuating unit as claimed in claim 1,
**characterized in that** the effective range of transmission can be influenced actively depending on the current rigidity of the brake.

19. Actuating unit as claimed in claim 1,
**characterized in that** the effective range of transmission can be influenced actively depending on the current temperature of the brake.

20. Actuating unit as claimed in claim 1,
**characterized in that** the effective range of transmission can be influenced actively depending on the 'on' condition of a speed control system.

21. Actuating unit as claimed in claim 1,
**characterized in that** the effective range of transmission can be influenced actively depending on the road condition derived from output signals of a rain sensor.

## Revendications

1. Unité d'actionnement pour un frein à disque à actionnement électromagnétique pour véhicule automobile, laquelle est disposée sur un étrier de frein (1) dans lequel sont disposées, de manière à pouvoir coulisser dans une mesure limitée, deux garnitures de friction (4, 5) coopérant chacune avec une surface latérale d'un disque de frein (6), l'une (4) des garnitures de friction (4, 5) pouvant être amenée en prise avec le disque de frein (6), au moyen d'un élément d'actionnement (7), directement par l'unité d'actionnement, et l'autre garniture de friction (5) par l'action d'une force de réaction appliquée par l'étrier de frein (1), l'unité d'actionnement comportant un moteur électrique ainsi qu'un dispositif à levier (3) lequel est couplé, en ce qui concerne son action, en aval du moteur électrique et est constitué d'un premier levier (10) qui est supporté en un point d'articulation (A ou 40) disposé de manière fixe par rapport à l'étrier de frein (1), ainsi que d'un second levier (20) qui est en liaison de transmission des forces avec l'élément d'actionnement (7), au moyen d'un dispositif de rattrapage (30) servant à compenser l'usure des garnitures de friction (4, 5), le dispositif de rattrapage de jeu (30) étant réalisé de manière à permettre des variations de la plage utile du dispositif à levier (10, 20) par une variation de la distance (A-C) entre le point d'articulation (A ou 40) et un point d'introduction des forces (C ou 60) du dispositif de rattrapage de jeu (30) dans l'élément d'actionnement (7), en conservant un jeu de service constant entre les garnitures de frein (4, 5) et le disque de frein (6), **caractérisée en ce que** la plage utile de multiplication peut être influencée activement en fonction de paramètres à sélectionner librement dans le sens du réglage de la distance (A-C), et **en ce que** le dispositif de rattrapage de jeu (30) comporte son propre dispositif d'entraînement (16) dont l'action permet de faire varier la position du point d'introduction des forces (C ou 60) du dispositif de rattrapage de jeu (30) dans l'élément d'actionnement (7).

2. Unité d'actionnement selon la revendication 1, **caractérisée en ce que** le dispositif de rattrapage (30) est formé par un boulon fileté (13) accouplé au second levier (20) et qui coopère avec l'élément d'actionnement (7) au moyen d'un filetage (14) autobloquant.

3. Unité d'actionnement selon la revendication 2, **caractérisée en ce que** l'élément d'actionnement (7) est réalisé dans une forme cylindrique, monté tournant dans l'étrier de frein (1) et coopère avec le dispositif d'entraînement (16) du dispositif de rattrapage (30) de manière que l'élément d'actionnement (7) soit mis en un mouvement de rotation.

4. Unité d'actionnement selon la revendication 3, **caractérisée en ce que** l'élément d'actionnement (7) est pourvu, sur sa surface, d'une denture (23) qui est en prise, par un élément de transmission (22) de forme annulaire, avec un élément denté (pignon (21)) qui est disposé sur un arbre moteur (18) associé au dispositif d'entraînement (16) du dispositif de rattrapage (30).

5. Unité d'actionnement selon l'une des revendications 1 à 4, **caractérisée en ce que** l'actionnement du dispositif à levier (3) s'effectue au moyen d'un profilé à came (12) qui agit sur un point de liaison (B ou 50) des leviers (10, 20).

6. Unité d'actionnement selon la revendication 5, **caractérisée en ce que** l'élément d'actionnement (7) est en liaison de transmission des forces de traction avec la garniture de friction (4) qui lui est associée, et **en ce que** le profilé à came (12) est attaché au point de liaison (B ou 50) des leviers (10, 20) de manière qu'une force de traction puisse être transmise à l'élément d'actionnement (7).

7. Unité d'actionnement selon la revendication 1, **caractérisée en ce que** la plage utile de multiplication peut être influencée activement en fonction de la vitesse du véhicule.

8. Unité d'actionnement selon la revendication 1, **caractérisée en ce que** la plage utile de multiplication peut être influencée activement en fonction du rapport qui est enclenché.

9. Unité d'actionnement selon la revendication 1, **caractérisée en ce que** la plage utile de multiplication peut être influencée activement en fonction- de la vitesse de rotation du moteur ou du couple moteur.

10. Unité d'actionnement selon la revendication 1, **caractérisée en ce que** la plage utile de multiplication peut être influencée activement en fonction de l'état de charge du véhicule.

11. Unité d'actionnement selon la revendication 1, **caractérisée en ce que** la plage utile de multiplication peut être influencée activement en fonction des signaux de sortie d'un système de régulation de distance.

12. Unité d'actionnement selon la revendication 1, **caractérisée en ce que** la plage utile de multiplication peut être influencée activement en fonction d'un dispositif relevant le coefficient de friction entre les pneus et le revêtement de la chaussée.

13. Unité d'actionnement selon la revendication 1, **caractérisée en ce que** la plage utile de multiplication peut être influencée activement en fonction de signaux de sortie d'un dispositif d'observation de la région des pieds.

14. Unité d'actionnement selon la revendication 1, **caractérisée en ce que** la plage utile de multiplication peut être influencée activement en fonction de la vitesse d'actionnement de la pédale de frein.

15. Unité d'actionnement selon la revendication 1, **caractérisée en ce que** la plage utile de multiplication peut être influencée activement en fonction de paramètres qui ont été déterminés au cours d'une analyse de freinage précédent, dans une fenêtre de temps limitée.

16. Unité d'actionnement selon la revendication 1, **caractérisée en ce que** la plage utile de multiplication peut être influencée activement en fonction de paramètres de fonctionnement du frein.

17. Unité d'actionnement selon la revendication 1, **caractérisée en ce que** la plage utile de multiplication peut être influencée activement en fonction de l'état d'usure des garnitures de friction.

18. Unité d'actionnement selon la revendication 1, **caractérisée en ce que** la plage utile de multiplication peut être influencée activement en fonction de la rigidité actuelle du frein.

19. Unité d'actionnement selon la revendication 1, **caractérisée en ce que** la plage utile de multiplication peut être influencée activement en fonction de la température actuelle du frein.

20. Unité d'actionnement selon la revendication 1, **caractérisée en ce que** la plage utile de multiplication peut être influencée activement en fonction de l'état d'enclenchement d'un système de régulation de la vitesse.

21. Unité d'actionnement selon la revendication 1, **caractérisée en ce que** la plage utile de multiplication peut être influencée activement en fonction de l'état de la chaussée dérivé d'un capteur de pluie.
